Europäisches Patentamt

European Patent Office

Office européen des brevets

(11) Numéro de publication: **0 309 403**
A2

## (12) DEMANDE DE BREVET EUROPEEN

(21) Numéro de dépôt: **88810625.9**

(22) Date de dépôt: **14.09.88**

(51) Int. Cl.⁴: **B 29 C 67/18**
B 29 C 67/22, A 63 C 5/12

(30) Priorité: **25.09.87 CH 3725/87**

(43) Date de publication de la demande:
**29.03.89 Bulletin 89/13**

(84) Etats contractants désignés: **AT DE FR IT**

(71) Demandeur: **Atomic Skifabrik Alois Rohrmoser**
**Markt 44**
**A-5602 Wagrain (AT)**

(72) Inventeur: **Cholat-Serpoud, Gérard**
**Sillans**
**F-38590 St.-Etienne de St.-Geoirs (FR)**

**Scherubl, Franz**
**Schwemmberg 117**
**A-5550 Radstadt (AT)**

(74) Mandataire: **Dousse, Blasco et al**
**7, route de Drize**
**CH-1227 Carouge/Genève (CH)**

(54) Procédé de fabrication d'un ski et ski obtenu selon ce procédé.

㊗ Selon ce procédé on forme des éléments modulaires (1,2) par moulage , par injection de polyuréthane liquide en leur incorporant des inserts (4, 5, 6) et en ménageant des portions d'assemblage (2b, 3a). On assemble alors ces éléments modulaires injectés pour ménager entre eux un espace intérieur fermé, dont l'étanchéité est suffisante pour que, ces éléments étant pressés l'un contre l'autre, la mousse expansée (7) ne puisse pas fuir hors de cet espace.

**FIG. 1**

EP 0 309 403 A2

Bundesdruckerei Berlin

**Description**

## PROCEDE DE FABRICATION D'UN SKI ET SKI OBTENU SELON CE PROCEDE

La présente invention se rapporte à un procédé de fabrication d'un ski selon lequel on assemble plusieurs éléments agencés pour ménager un espace intérieur dans lequel on injecte une mousse de matière plastique de remplissage liant ces éléments entre eux, ainsi qu'à un ski obtenu selon ce procédé.

La fabrication de skis par injection de mousse de polyuréthane est bien connue et largement utilisée actuellement. Elle consiste à disposer dans un moule tous les éléments formant le ski, notamment, la semelle de glissement, les carres, les éléments de renfort supérieur et inférieur, un éventuel noyau, les éléments de chants et le dessus du ski. Une fois positionnés, le moule est fermé, la mousse de polyuréthane est injectée et chauffée quelques minutes pour l'ex panser et la polymériser et assurer la liaison de ces éléments par collage.

L'espace intérieur ménagé après l'assemblage des divers éléments composants le ski n'est évidemment pas étanche, ces éléments étant simplement posés les uns sur les autres et maintenus par une certaine pression exercée sur le moule, pendant l'injection de la mousse de polyuréthane. Cette mousse s'échappe par les nombreuses fentes qui séparent cet empilement d'éléments. Une fois le ski démoulé, plusieurs opérations de reprises sont nécessaires sur les quatre faces du ski pour éliminer la mousse qui a débordé sur ces faces. Un autre inconvénient de cette solution provient du grand nombre d'éléments à assembler dans le moule, ceux-ci étant généralement entre 8 et 12 suivant les cas.

Si l'on injecte couramment de la mousse de polyuréthane expansée pour former le noyau du ski, il est beaucoup plus rare d'injecter de la matière plastique non expansée pour réaliser des skis ou des éléments de skis en raison du rapport section/ longueur des skis qui nécessitent, avec les polyuréthanes classiques disponibles sous forme solide et ramollis à chaud, des pressions telles qu'ils les rendent inutilisables avec les presses à injecter disponibles.

Il est apparu récemment sur le marché des polyuréthanes sous forme fluide. Il a été proposé, dans le FR-2589073 de réaliser un élément de ski préfabriqué comprenant un noyau, un élément de glissement, des carres, des éléments de renforcements, supérieur et inférieur. Le dessus et les chants de ce ski sont ensuite revêtus par application par projection, moulage ou injection d'une couche de matière plastique qui présente la forme d'une coiffe en U. Cette solution permet, par cette opération de moulage finale, de supprimer les opérations de finition, les irrégularités de noyau étant absorbées par le moulage qui revêt la face supérieure et les chants du ski. S'il résulte de cette solution une diminution des opérations de finition qui permet de réaliser un gain de productivité, il n'en demeure pas moins que le reste de la fabrication du ski reste traditionnelle et qu'il est toujours nécessaire d'assembler un nombre assez élevé d'éléments qui forme un stratifié dont les couches sont collées les unes aux autres selon un procédé traditionnel.

Le but de la présente invention est de permettre la fabrication d'un ski injecté en partant au moins en partie d'éléments modulaires injectés de manière à réduire au maximum le nombre de pièces à assembler et à permettre, grâce à un emboîtement des pièces à assembler, de former un espace interne fermé dans lequel l'expansion de la mousse de polyuréthane qui exerce une presion de l'ordre 500 Pa ne permet pratiquement pas à cette mousse de fuir et de s'écouler sur les faces externes du ski.

A cet effet, la présente invention a pour object un procédé de fabrication d'un ski conforme à la revendication 1, ainsi qu'un ski obtenu par ce procédé.

Non seulement le procédé selon l'invention permet d'obtenir une surface externe finie après injection de la mousse de polyuréthane en ménageant un espace interne délimité par un véritable boitier formé de pièces assemblées et non simplement juxtaposées, mais le nombre de pièces à assembler dans le moule se situe entre deux et cinq. En outre ces pièces étant liées les unes aux autres par des surfaces d'assemblage, elles occupent des positions définies avec précisions par ces surfaces qui constituent des organes de positionnement mutuel de ces pièces. Le moulage d'au moins une partie des pièces assemblées constitue également un facteur de haute précision qui facilite l'assemblage et permet notamment l'assemblage par emboîtement qui garantit une bonne étanchéité de l'espace interne appelé à recevoir l'injection de mousse de matière plastique expansée. Non seulement les pièces sont donc moins nombreuses, mais leur positionnement est rendu plus aisé grâce aux surfaces d'assemblage.

D'autres caractéristiques et avantages apparaîtront à la lecture de la description du procédé objet de l'invention, qui va suivre, faite en regard du dessin annexé illustrant diverses variantes de ski obtenues par la mise en oeuvre de ce procédé.

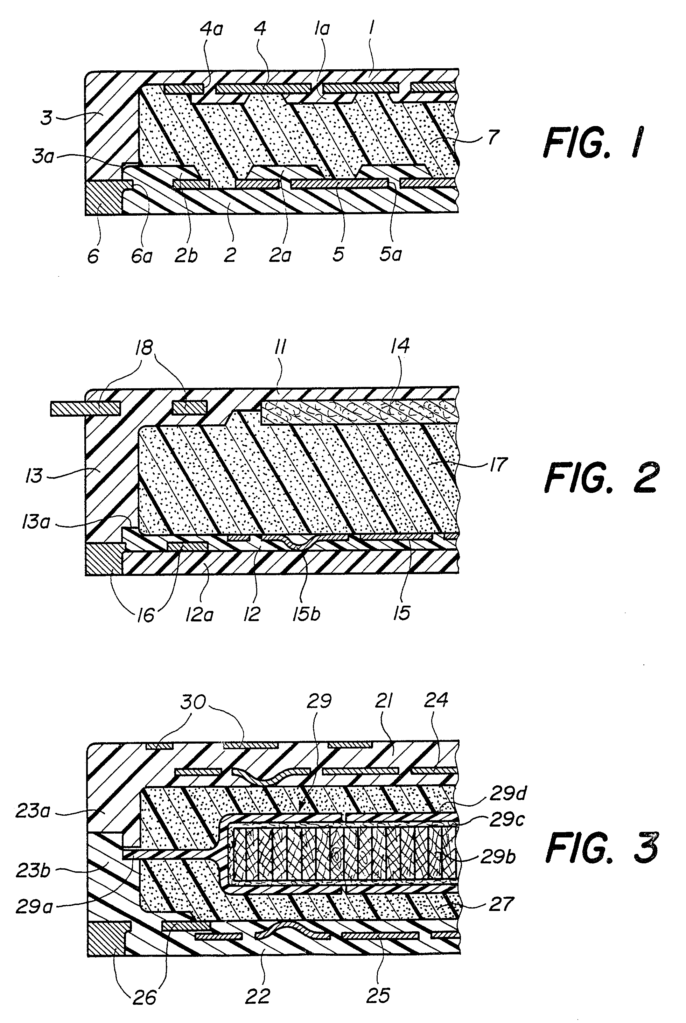

Les fig. 1 à 9 sont des demi-vues en coupe de skis illustrant ces diverses variantes.

Le ski illustré par la fig. 1 comporte un élément modulaire supérieur 1 moulé par injection et un élément modulaire inférieur 2, formé essentiellement d'une semelle de glissement, également moulée par injection. L'élément modulaire supérieur 1 est venu d'une pièce avec les chants 3. Un insert de renforcement, ici une lame d'acier perforée 4 est disposée dans le moule servant à injecter l'élément modulaire supérieur. La matière plastique injectée dans ce moule peut traverses les perforations 4a de la lame d'acier et former de l'autre côté de cette lame des longerons d'ancrage la qui permettent d'intégrer la lame d'acier à cet élément modulaire supérieur du ski. L'espace ménagé entre ces longerons sert au positionnement de la lame 4 dans le moule d'injection.

Selon le même principe, une lame d'acier perforée de renforcement inférieure 5 est intégrée à la semelle de glissement 2. La matière plastique injectée traverse également les perforations 5a de la lame d'acier 5 pour former de l'autre côté des longerons d'ancrage 2a. Les carres 6 dont l'une seulement est visible présentent des perforations 6a permettant à la matière plastique injectée de former un longeron d'ancrage 2b. Ce longeron 2b vient s'emboîter contre une portée 3a ménagée dans chaque chant 3 de l'élément modulaire supérieur 1, formant ainsi à l'intérieur du ski, un espace fermé suffisamment étanche pour empêcher les fuites de matière plastique durant l'injection d'un noyau 7 en mousse de polyuréthane expansée.

Le ski réalisé selon ce procédé comporte donc deux éléments modulaires 1 et 2 qui comportent les lames de renforcement et les carres. L'assemblage de ces éléments modulaires 1 et 2 peut être suffisamment précis, dans la mesure où ces éléments sont moulés par injection pour que l'espace intérieur dans lequel le noyau 7 est injecté soit étanche à cette mousse ces éléments étant pressés l'un contre l'autre. Ceci évite les opérations ultérieures de finition après injection de ce noyau. C'est donc un ski terminé qui sort du moule, seules les opérations de décoration par sérigrahie restant à effectuer. L'assemblage avant injection est donc ici réduit au minimum, seules deux pièces étant réunies, l'emboîtement donnant un positionnement précis de ces deux parties.

La matière plastique utilisée pour l'injection des ces deux éléments modulaires préfabriqués 1 et 2 est du polyuréthane de la firme Bayer, le Bayflex® No PU 1427-44 P 90 + GF-15% qui se présente sous forme liquide avant polyumérisation et permet de ce fait l'injection sur grande longueur pour une faible section, sans nécessiter de presse à injecter spéciale, la résistance opposée par ce produit liquide étant beaucoup plus faible que celle des produits solides que l'on ramollit pour injecter et qui présentent une viscosité telle qu'il devient impossible de les injecter dans le cas de pièces présentant un rapport section-longueur de l'ordre des éléments modulaires 1 et 2 de ski.

Il est évidemment possible d'envisager avec le même procédé des skis présentant des structures différentes de celle de la fig. 1.

La variante illustrée par la fig. 2 se différencie essentiellement de celle de la fig. 1 par la nature de l'élément de renforcement supérieur 14 qui est formé par un stratifié incorporant des fibres de renforcement, ce stratifié étant partiellement noyé dans la matière plastique formant l'élément modulaire supérieur 11 et les chants 13. Cet élément modulaire comporte en plus des carres supérieures 18. L'élément modulaire inférieur 12 comporte une semelle de glissement rapportée 12a et renferme une lame de renforcement 15 en acier qui comporte des bossages 15b destinés à permettre de réserver un espace entre la lame 15 et le fond du moule afin que la matière plastique entoure complètement cette lame 15. Les carres 16 sont partiellement noyées dans cet élément modulaire inférieur 12.

Comme dans le cas de la fig. 1, les chants 13 présentent une partie 13a dans laquelle s'emboîte la partie de la semelle formée par l'élément modulaire 12, située au-dessus de la carre 16. L'espace interne délimité par l'assemblage des éléments modulaires 11 et 12 est rempli de mousse de polyuréthane expansée 17 formant le noyau de remplissage qui fixe ces deux éléments modulaires l'un à l'autre.

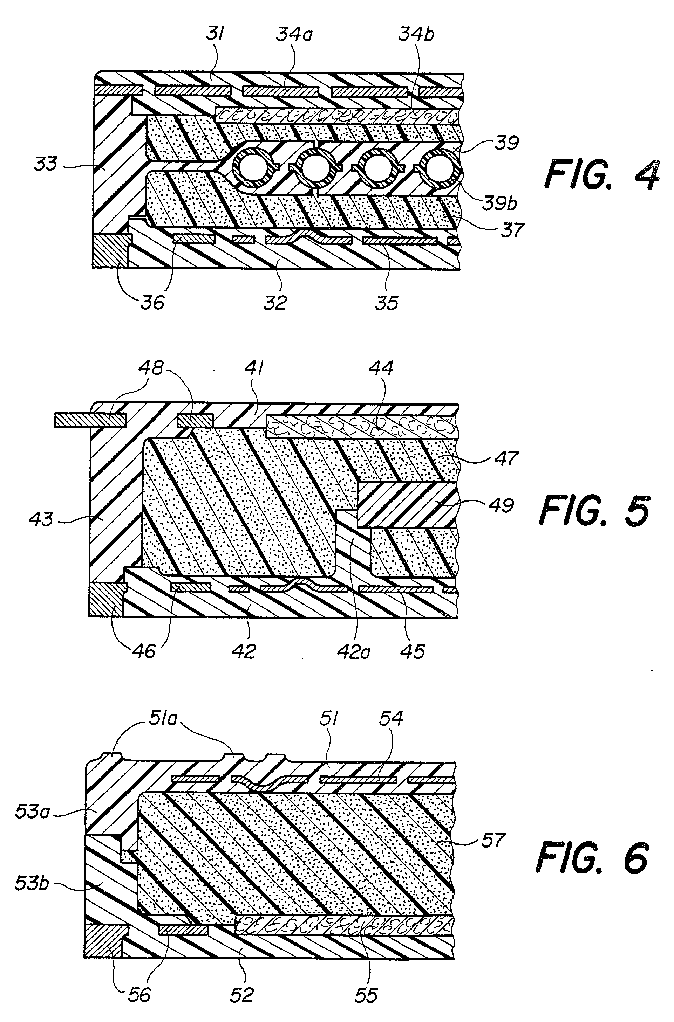

Dans la variante de la fig. 3, les deux éléments modulaires supérieur et inférieur 21, 22 comportant chacun deux demi-chants 23a, 23b respectivement, l'un d'eux étant visible sur la demi-vue en coupe de cette figure 3. Ces demi-chants sont conformes pour s'emboîter l'un dans l'autre en ménageant intérieurement un espace dans lequel vient s'insérer un prolongement latéral 29a d'un élément modulaire intermédiaire 29. Cet élément peut présenter diverses structures. Ici il renferme un noyau en bois 29b entouré d'un tissu de renforcement 29c noyé dans la matière plastique injectée 29 d et formant ainsi une boîte de torsion. L'élément modulaire inférieur 22 comporte à nouveau une lame de renforcement 25 et des carres 26 moulées dans cet élément inférieur. L'élément supérieur comporte une lame de renforcement 24 ainsi qu'une incrustation 30 qui affleure la surface supérieure et constitue une partie de la décoration du ski. Une fois les trois éléments assemblés, l'emboîtement des éléments 21 et 22 maintenant entre eux l'élément 29, de la mousse de polyuréthane expansée est injectée dans l'espace libre formant le noyau de remplissage 27. En variante et en lieu et place de l'élément modulaire intermédiaire 29, on pourrait insérer dans l'espace ménagé entre les deux demi-chants 23a, 23b une lame de renforcement en métal ou en stratifié.

La variante de la fig. 4 se distingue des précédentes essentiellement par le fait que les éléments modulaires supérieur 31 et inférieur 32 sont plats, les chants 33 étant venus de moulage avec un élément modulaire intermédiaire 39 dans lequel sont noyés des tubes creux 39b destinés à alléger le ski.

L'élément modulaire supérieur 31 comporte deux éléments de renforcement, l'un supérieur 34a, formé par une lame de Zicral (alliage d'aluminium) et qui s'étend sur toute la largeur du ski et sert aussi de carres supérieures, l'autre inférieur 34 formé d'un stratifié incorporant des fibres de renforcement partiellement noyé dans l'élément modulaire 31.

L'élément modulaire inférieur 32 identique à celui de la fig. 2 comporte également une lame de renforcement 35 et des carres 36.

Les éléments modulaires plats 31, 32 sont emboîtés sur les chants 33 de l'élément modulaire intermédiaire 39. L'espace intérieur est de nouveau rempli par de la mousse de polyuréthane expansée 37.

La fig. 5 illustre de nouveau une variante sans élément modulaire intermédiare, les chants 43 étant venus de moulage avec l'élément modulaire supérieur 41 qui comporte un élément de renforcement en stratifié incorporant des fibres de renforcement 44 et des carres supérieures 48.

L'élément modulaire inférieur 42 s'emboîte sur les chants 43 de l'élément modulaire supérieur et comporte une lame de renforcement 45 et des carres 46. Cet élément modulaire 42 présente des entretorses 42a qui servent à positionner un noyau 49 ou une boîte de torsion. L'espace intérieur est de nouveau rempli de mousse de polyuréthane expansée 47.

Par rapport aux diverses variantes précédentes, celle illustrée par la fig. 6 se distingue essentiellement par le fait qu'un relief 51a est réalisé sur le dessus de la face supérieure de l'élément modulaire supérieur 51. Ce relief peut servir aussi bien à la décoration qu'à la protection de la surface supérieure du ski.

Cet élément supérieur comporte une lame de renforcement 54 et deux demi-chants 53a qui s'emboîtent avec deux demi-chants 53b de l'élément modulaire inférieur 52 qui comporte un tissu de renforcement 55 partiellement noyé dans cet élément moulé par injection et des carres 56.

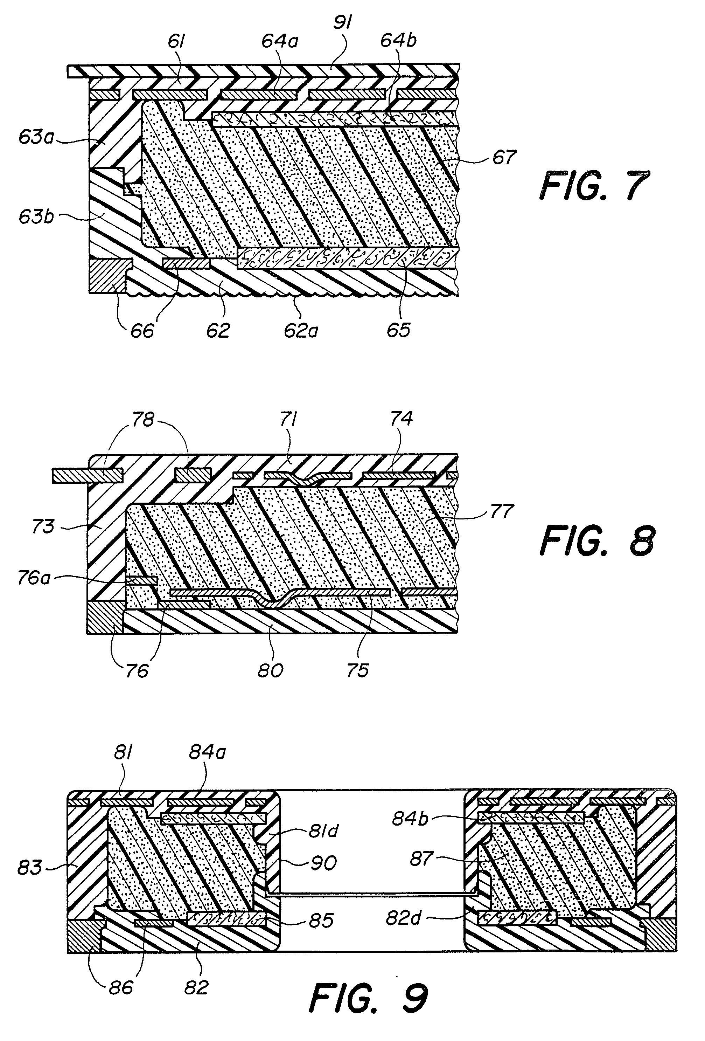

La particularité marquante de la variante de la fig. 7 est celle d'avoir un élément modulaire inférieur 62 dont la surface 62a formant la semelle de glissement présente une structure particulière, comme la stucture en écailles de poisson utilisée pour les skis de fond ou une autre structure destinée à conférer des propriétés de glissement particulières ou encore à ménager des évidements destinés à servir de réserve de farte ou à créer des poches d'air. Le reste de ce ski est semblable aux autres variantes et comporte deux éléments modulaires 61, 62 avec demi-chants 63a, 63b emboîtés. L'élément modulaire supérieur comporte une lame de renforcement supérieure 64a en alliage d'aluminium type Zicral qui s'étend sur toute la largeur du ski et sert en même temps de carres supérieures, et un stratifié de renforcement inférieur 64b partiellement noyé dans cet élément modulaire supérieur. Il est en outre recouvert d'une feuille de polycarbonate translucide 91 à face externe brillant et à face interne mat, de Bayer. Cette face interne est décorée par sérigraphie avec une encre cellulosique vendue par Tiflex à Poncin (France) sous la référence XE 600. On dépose ensuite sur cette même face interne une couche primaire polyuréthane le Kiwo-print® No 3046 de Bayer puis on la revêt d'une laque polyuréthane à deux composants : le poliol 9101 et l'isocianate 1021 de Stollack à 2353 Guntramsdorf (Autriche).

La feuille 91 ainsi préparée est alors placée dans le moule destiné au moulage par injection de l'élément modulaire 61 en résine de polyuréthane. Les bords de la feuille 91 dépassent ceux de l'élément 61 pour être pincés entre les deux parties du moule d'injection. Ils sont ensuite coupés pour les aligner avec les faces des chants, de sorte que le ski est complètement terminé et décoré une fois le noyau de remplissage 67 injecté. L'avantage de cette solution est qu'il est beaucoup plus facile de prédécorer la feuille 91 seule que de décorer le ski terminé, cette feuille pouvant même être travaillée en continu. En outre, le décor ménagé sur le revers de la feuille est protégée de la dégradation. On a déjà utilisé ce genre de solution qui consiste à décorer le revers d'une feuille transparente de polyéthylène. Toutefois une telle feuille est moins brillante et moins dure que le polycarbonate, d'où l'amélioration apportée par la solution proposée. Par ailleurs, compte tenu du procédé de fabrication du ski selon l'invention, dans lequel les éléments modulaires sont emboîtés et constituent en quelque sorte des éléments de moule perdu pour le moulage du noyau, évitant les débordements de la mousse lors de l'injection du noyau, le ski est, selon cette variante, totalement terminé après cette opération, réduisant sensiblement les coûts de fabrication. L'élément modulaire inférieur comporte également un stratifié de renforcement 65 partiellement noyé dans le polyuréthane injecté, ainsi que des carres 66, et un noyau de remplissage 67 en mousse de polyuréthane.

La variante de la figure 8 se rapporte à un mode de mise en oeuvre du procédé dans lequel seul l'élément supérieur 71 est un élément modulaire venu d'une pièce moulage-injection avec les chants 73 et comportant une lame de renforcement 74 et des carres 78. La semelle de glissement 80 n'est pas moulée mais est une semelle découpée dans un ruban extrudé. Une lame de renforcement 75 est posée sur cette semelle qui est emboîtée entre deux carres 76. La partie horizontale de chaque carre, qui s'étend au-dessus de la semelle de glissement 80 comporte des saillies étampées 76a qui servent à l'assemblage de la semelle 80 et des carres 76 contre la face interne des chants 73. La partie horizontale des carres 76 appuyant contre la semelle, les saillies 76a s'engagent à frottement contre les faces internes des chants.

La dernière variante illustrée par la fig. 9 est une coupe transversale du ski notamment au niveau de la spatule, dans laquelle un trou 90 est ménagé. Ce trou est destiné en particulier aux skis de randonnée pour permettre de passer une corde pour tirer le ski. A cet effet chaque élément modulaire 81, 82 comporte une partie tubulaire 81d, 82d. Ces parties tubulaires s'emboîtent l'une dans l'autre. Le reste du ski est semblable aux variantes décrites précédemment avec une lame de renfort supérieure 84a formant également carres supérieures, un stratifié de renfort supérieur 84b, un stratifié de renfort inférieur 85, des carres inférieures 86, les chants 83 étant venus d'une pièce avec l'élément modulaire supérieur 81, espace intérieur fermé étant rempli d'une mousse de polyuréthane expansée 87. Le trou 90 pourrait être constitué par un trou borgne à sa partie inférieure et être de ce fait disposé sur n'importe quelle partie de la longueur du ski. Un tel trou peut servir de logement à différents éléments rapportés.

Grâce au moulage par injection des éléments modulaires 1, 2, 11, 12 ...81, 82, il est possible de former des surfaces d'emboîtement pour réaliser un assemblage de ces éléments suffisamment étanche pour empêcher les fuites de mousse de polyuréthane expansée lors de l'injection de cette mousse 7, 17, ...87 dans l'espace ménagé entre ces éléments modulaires et d'obtenir ainsi directement un ski à l'état terminé. Contrairement aux procédés de fabrication de skis injectés actuels dans lequels les différents composés du ski sont simplement posés les uns sur les autres et maintenus sous pression durant l'injection, selon le procédé décrit ici, l'emboîtement d'éléments modulaire, permet de réaliser un véritable auto-moulage de la mousse expansée remplissant l'espace intérieur. L'intégration des éléments de renforcement et des carres aux éléments modulaires préfabriqués constitue également une simplification des processus de fabrication. Le positionnement de ces divers composants dans les éléments modulaires est réalisé par des portées des logements de positionnement du moule lui-même; dans le cas de lames d'acier, telles que 15, 24, 25, 35, etc, présentant des bossages d'écartement avec le fond du moule, ces lames peuvent être retenues magnétiquement par des aimants logés sous le moule selon une technique connue. Alors que le ski dit "injecté" actuel est un ski stratifié ménageant un espace intérieur dans lequel de la mousse expansée est injectée, le ski selon l'invention est un ski formé d'éléments modulaires injectés que l'on assemble par emboîtement pour réaliser l'injection de la mousse expansée dans un véritable boitier formé par les éléments modulaires assemblés. Le contexte du stratifié avec tous ses inconvénients a donc complètement disparu par la formation d'élément modulaires réalisés en plastique injecté avec insertion de composants divers destinés à conférer au ski les propriétés mécaniques désirées. Ce procédé permet donc de réaliser un gain de productivité appréciable par rapport aux procédés de fabrication de skis injectés connus.

## Revendications

1. Procédé de fabrication d'un ski selon lequel on assemble plusieurs éléments agencés pour ménager un espace intérieur dans lequel on injecte une mousse de matière plastique de remplissage liant ces éléments entre eux, caractérisé par le fait que l'on forme au moins deux éléments présentant l'ensemble des surfaces externes du ski ainsi que des surfaces d'emboîtement que l'on réalise au moins l'un de ces éléments par moulage en disposant dans le moule au moins un insert, on assemble ces deux éléments par lesdites surfaces d'emboîtement de manière à former entre elles ledit espace intérieur dans lequel on injecte ladite mousse de matière plastique.

2. Procédé selon la revendication 1, caractérisé par le fait que l'on dispose ledit insert dans un moule et que l'on remplit ce moule par injection de matière plastique.

3. Procédé selon la revendication 1, caractérisé par le fait que l'on forme l'ensemble de la surface externe du ski par au moins deux éléments réalisés par moulage et que l'on ménage sur chacun d'eux des surfaces d'emboîtement pour les assembler.

4. Procédé selon la revendication 1, caractérisé par le fait que pour réaliser celui desdits éléments qui présente la face supérieure du ski, on décore le revers d'une feuille de polycarbonate translucide, on enduit ce revers d'une couche primaire polyuréthane puis d'une laque polyuréthane, on dispose cette feuille dont la largeur est supérieure à celle du ski contre une face du moule en pinçant les parties excédant la largeur du ski entre cette face et une portée de l'autre partie du moule après y avoir disposé ledit insert, on injecte du polyuréthane, on démoule l'élément ainsi obtenu et on ramène la largeur de ladite feuille à la largeur du ski.

5. Ski obtenu par la mise en oeuvre du procédé selon la revendication 1.

6. Ski selon la revendication 5, caractérisé par le fait que ledit insert est un élément de renforcement.

7. Ski selon la revendication 5, caractérisé par le fait que ledit insert est une carre.

8. Ski selon la revendication 5, caractérisé par le fait qu'il comporte au moins deux éléments moulés dont les surfaces d'assemblage sont des surfaces d'emboîtement.

9. Ski selon la revendication 5, caractérisé par le fait que l'une desdites parties comporte la face supérieure et les deux chants du ski.

10. Ski selon la revendication 5, caractérisé par le fait qu'il comporte deux parties, inférieure respectivement supérieure chacune présentant une portion de chacune des surfaces de chant du ski.

11. Ski selon la revendication 5, caractérisé par le fait qu'il comporte un noyau interne moulé présentant deux prolongements latéraux tenus entre les parties supérieure et inférieure du ski.

12. Ski selon la revendication 11, caractérisé par le fait fait que les chants sont venus d'une pièce avec les prolongements latéraux respectifs.

13. Ski selon la revendication 5, caractérisé par le fait que la surface supérieure de l'élément supérieur moulé présente au moins une partie en relief.

14. Ski selon la revendication 5, caractérisé par le fait que la partie inférieure est obenue par moulage et que sa surface inférieure de glissement présente une conformation non plane choisie pour lui conférer des propriétés de glissement particulières.

15. Ski selon la revendication 5, caractérisé par le fait qu'au moins un insert affleure la face externe de l'élément modulaire supérieur.

16. Ski selon l'une des revendications 5 et 8, caractérisé par le fait que ledit élément obtenu par moulage comporte une partie tubulaire perpendiculaire aux grandes faces du ski et s'étendant sur au moins une partie de l'épaisseur du ski.

17. Ski selon la revendication 8, caractérisé par le fait que l'élément moulé inférieur comporte une semelle de glissement incorporée.

FIG. 1

FIG. 2

FIG. 3

FIG. 4

FIG. 5

FIG. 6

*FIG. 7*

*FIG. 8*

*FIG. 9*